Europäisches Patentamt

European Patent Office

Office européen des brevets

(19)

(11) Veröffentlichungsnummer: **0 299 357**
**B1**

(12) # EUROPÄISCHE PATENTSCHRIFT

(45) Veröffentlichungstag der Patentschrift:
**27.12.90**

(51) Int. Cl.⁵: **B60R 19/56**

(21) Anmeldenummer: **88110854.2**

(22) Anmeldetag: **07.07.88**

(54) Nutzfahrzeug, insbesondere Kipperfahrzeug mit im rückwärtigen Endbereich angeordnetem Unterfahrschutz.

(30) Priorität: **07.07.87 DE 3722313**

(43) Veröffentlichungstag der Anmeldung:
**18.01.89 Patentblatt 89/3**

(45) Bekanntmachung des Hinweises auf die Patenterteilung:
**27.12.90 Patentblatt 90/52**

(84) Benannte Vertragsstaaten:
**FR GB IT**

(56) Entgegenhaltungen:
**DE-U- 8 324 904**
**GB-A- 2 122 551**
**US-A- 3 871 695**
**US-A- 4 582 351**

(73) Patentinhaber: **DAIMLER-BENZ AKTIENGESELLSCHAFT, Mercedesstrasse 136, D-7000 Stuttgart 60(DE)**

(72) Erfinder: **Bode, Peter, Alemannenstrasse 7, D-7056 Weinstadt(DE)**
Erfinder: **Herzog, Paul, Sandweg 12, D-7128 Lauffen(DE)**
Erfinder: **Zittel, Siegfried, Gerstenweg 3, D-7300 Esslingen(DE)**

ACTORUM AG

## Beschreibung

Die Erfindung betrifft ein Nutzfahrzeug, insbesondere ein Kipperfahrzeug mit im rückwärtigen Endbereich angeordnetem Unterfahrschutz, der aus seiner durch Verriegelung festgelegten Lage für den Straßenverkehrsbetrieb (Straßenverkehrslage) in eine angehobene Lage für den Geländeverkehrsbetrieb (Geländeverkehrslage) verschwenkbar und zusätzlich in dieser Lage arretierbar ist und der einen rückwärtigen quer zur Fahrzeuglängsachse liegenden Schutzbalken und, bezogen auf die Fahrzeuglängsrichtung, vor diesem liegende, diesen abstützende und um eine quer verlaufende Achse verschwenkbare Längsstreben umfaßt, die über zumindest eine hinter der Schwenkachse liegende Stütze gegen das Fahrzeug abgestützt sind.

Kipperfahrzeuge der vorgenannten Art sind durch das deutsche Gebrauchsmuster DE-U 8 324 904 bekannt. Die Längsstreben, und damit der Unterfahrschutz sind dabei in Höhenrichtung durch eine Stütze festgelegt, die mit dem Kipperaufbau verbunden ist und die aufgrund einer Langlochführung in der Verbindung zu den Längsstreben eine Höhenverstellbarkeit des Unterfahr schutzes gegenüber dem Kipperaufbau zuläßt. Hier ist zwar eine gewisse Variabilität bezüglich der Höhenlage des Unterfahrschutzes gegenüber dem Kipperaufbau möglich, die Abstützung ist aber im Hinblick auf Kräfte, wie sie beispielsweise bei einem von hinten aufprallenden Fahrzeug auftreten, nicht stabil genug.

Der Erfindung liegt die Aufgabe zugrunde, einen Unterfahrschutz der eingangs genannten Art hinreichend stabil auszubilden und auch in seiner entsprechenden Schutzlage sicher zu fixieren.

Erreicht wird dies dadurch, daß die Längsstreben nach vorne über die Schwenkachse hinausragen und in der Straßenverkehrslage gegen einen vor der Schwenkachse liegenden Anschlag über eine Spannvorrichtung verspannt sind, die, der mit dem Fahrzeugrahmen verbundenen Stütze zugeordnet, eine an dieser gelagerte Verriegelung und, der Längsstrebe zugeordnet, ein mit einem Verriegelungshebel zusammenwirkendes Verriegelungselement sowie einen Schwenkhebel aufweist, der mit dem Verriegelungshebel über ein Zwischenstück verbunden ist. Bei dieser Lösung bilden die Schwenkachse, der vor der Schwenkachse liegende Anschlag und die hinter der Schwenkachse liegende Stütze nebst zugehöriger Spannvorrichtung ein Stützdreieck, das rahmenfest ist und das sich durch große Stabilität auszeichnet.

Zur Verspannung ist erfindungsgemäß eine Spannvorrichtung vorgesehen, die, der Stütze zugeordnet, einen an dieser gelagerten Verriegelungshebel und, der Längsstrebe zugeordnet, ein mit dem Verriegelungshebel zusammenwirkendes Verriegelungssegment sowie einen Schwenkhebel aufweist, der mit dem Verriegelungshebel über ein Zwischenstück verbunden ist. Bevorzugt ist der Schwenkhebel als Handhebel ausgebildet und es bildet das Zwischenstück bevorzugt ein Druckstück, das in seiner Länge einstellbar und gegen Federkraft zusammendrückbar ist. Hierdurch ist in einfacher Weise eine Sicherung der jeweiligen Arretierungslage zu gewährleisten, wenn der Schwenkhebel bei der Umstellung aus seiner Öffnungslage in seine jeweilige Arretierungslage eine Totpunktstellung durchfährt.

Zur Verspannung des Unterfahrschutzes gegen den Anschlag in der Straßenverkehrslage weist das Verriegelungssegment zweckmäßigerweise eine durch einen Verriegelungsnocken des Verriegelungshebels beaufschlagbare Anlaufkurve aus. Zusätzlich ist eine Sperrlage zur Arretierung des Unterfahrschutzes in der Geländeverkehrslage vorzusehen, die zweckmäßigerweise durch eine zusätzliche Aufnahme des Verriegelungssegmentes für den Verriegelungsnocken gebildet wird. Diese Aufnahme ist bevorzugt als den Verriegelungsnocken aufnehmende Ausnehmung ausgebildet, so daß bei Eingriff des Verriegelungsnockens in diese Ausnehmung der Unterfahrschutz in der Geländeverkehrslage höhenfest fixiert ist.

Eine solche höhenfeste Fixierung ist einerseits erforderlich, um ein unerwünschtes Nachgeben des Unterfahrschutzes auszuschließen und insbesondere auch Schwenkbewegungen des Unterfahrschutzes im Fahrbetrieb zu vermeiden. Andererseits kann der Unterfahrschutz in der Geländeverkehrslage insbesondere in Verbindung mit Kipperfahrzeugen hinderlich sein, wenn beim Verschwenken der Kippermulde nach hinten unten der Unterfahrschutz diese Schwenkbewegung behindert. Um hier Abhilfe zu schaffen, kann erfindungsgemäß die der Stütze zugeordnete Lagerung des Verriegelungshebel gegenüber dem Fahrzeugrahmen federnd nachgiebig im Sinne einer Verlängerung der Stütze vom Rahmen weg gestaltet sein. Bei entsprechender Federhärte einer solchen Abstützzung sind unerwünschte Bewegungen des Unterfahrschutzes in der Geländeverkehrslage zu vermeiden, es kann andererseits aber der Unterfahrschutz durch die Kippermulde bei deren Verschwenkung nach hinten unten in nötigem Maße nach unten verschwenkt werden, so daß der Kipperbetrieb durch den Unterfahrschutz auch in dessen Geländeverkehrslage nicht behindert ist. Zweckmäßigerweise kann zu diesem Zweck die Stütze als ausziehbarer Federzylinder ausgebildet sein.

Erfindungsgemäß erweist es sich als zweckmäßig, wenn für den Federzylinder eine schwenkbare Anlenkung am Fahrzeugrahmen vorgesehen ist. Bei einer solchen Anlenkung des Federzylinders erweist es sich als vorteilhaft, wenn die Spannvorrichtung zusätzlich einen den Abstand zwischen der Schwenkachse des Schwenkhebels und der Achse des Verriegelungshebels festlegenden Lenker aufweist.

Die Erfindung wird im folgenden anhand von Ausführungsbeispielen näher erläutert.

Es zeigen:

Figur 1 in schematischer Darstellung den rückwärtigen Rahmenteil eines Nutzfahrzeuges mit daran angelenktem Unterfahrschutz in einer Verriegelungsstellung für den Unterfahrschutz, die dessen für den Straßenverkehrsbetrieb vorgesehener Höhenlage in Bezug auf das Fahrbahnniveau entspricht,

Figur 2 eine Darstellung entsprechend jener gemäß Figur 1, jedoch nach Verschwenken des Unterfahrschutzes in eine gegenüber der Straßenverkehrslage angehobene Geländeverkehrslage,

Figure 3 eine im Prinzip der Darstellung gemäß Figur 1 entsprechende Ausgestaltung, bei der die zur Abstützung des Unterfahrschutzes gegenüber dem Rahmen vorgesehene Stütze durch einen Federzylinder gebildet ist,

Figure 4 das Ausführungsbeispiel gemäß Figur 3 in einer der Figur 2 entsprechenden Schwenklage des Unterfahrschutzes, und

Figur 5 eine schematische Darstellung, in der das Zusammenwirken des Unterfahrschutzes in seiner Geländelage mit der auf dem Rahmen des Fahrzeuges gelagerten Kippermulde gezeigt ist.

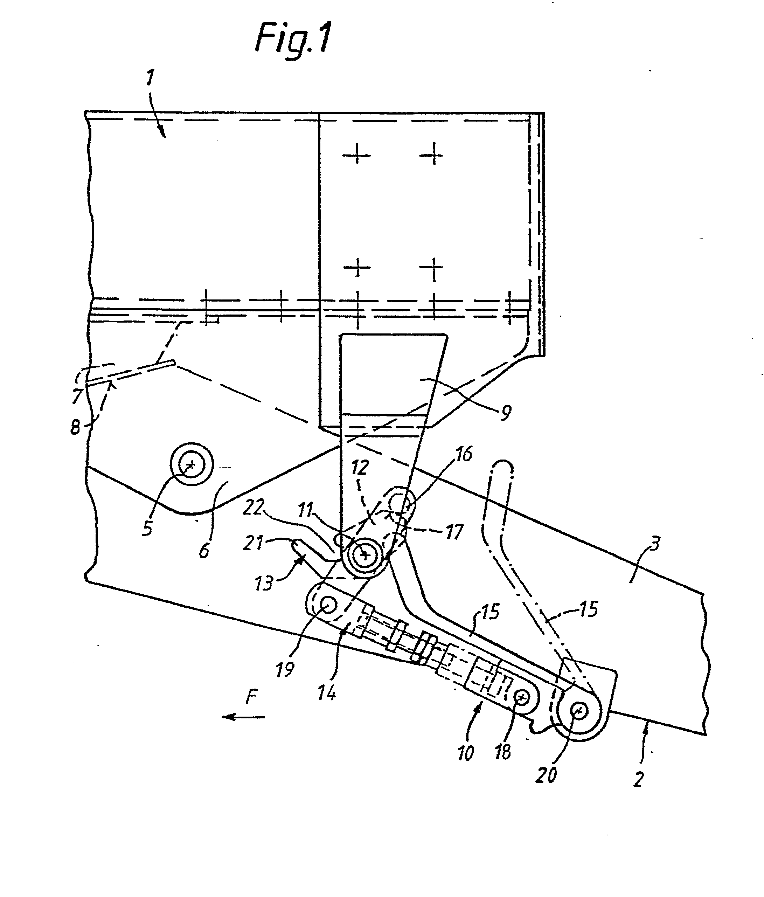

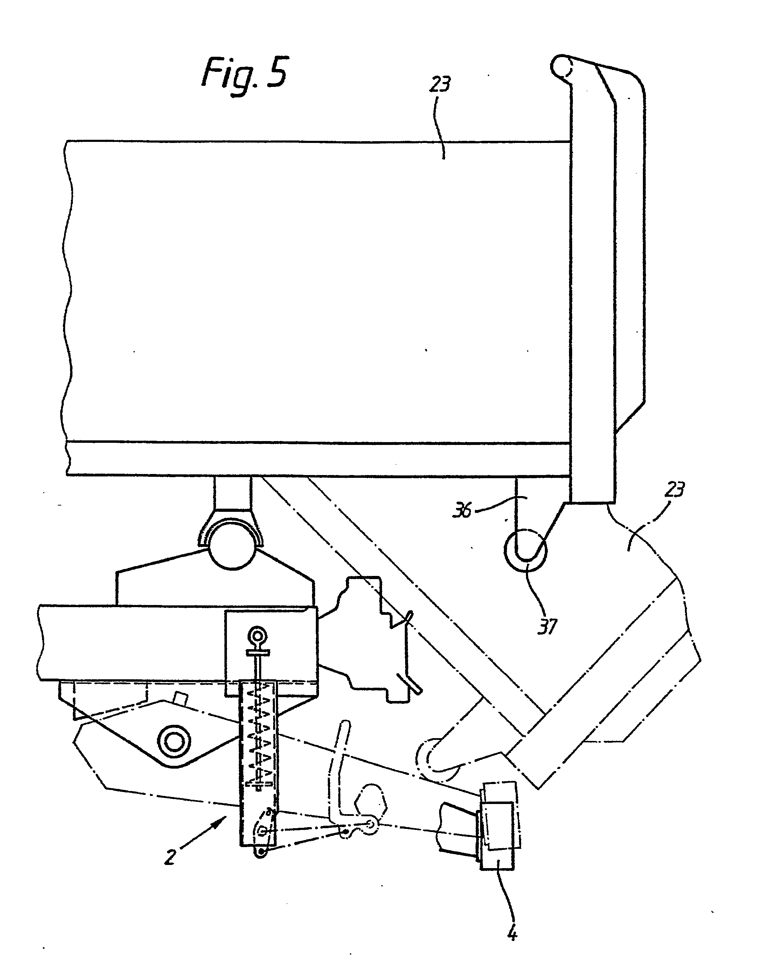

Figur 1 zeigt in Seitenansicht das hintere Endteil des Rahmens 1 eines Nutzfahrzeuges, an dem ein Unterfahrschutz 2, der nur teilweise gezeigt ist, angebracht ist. Der Unterfahrschutz 2 weist, beiden Längsseiten des Fahrzeuges zugeordnet, Längsstreben 3 auf, die an ihrem rückwärtigen Ende (siehe Figur 5) durch einen Schutzbalken 4 verbunden sind.

Der Unterfahrschutz 2 ist über die Längsstreben 3 an der Unterseite des Rahmens 1 angelenkt, wobei, wie Figur 1 zeigt, die Anlenkung über eine Querachse 5 erfolgt, die ihrerseits an einer den Rahmen 1 nach unten fortsetzenden Lasche 6 mit dem Rahmen 1 verbunden ist. Der Querachse 5 in Bezug auf die Vorwärtsfahrrichtung - Pfeil F - vorgelagert ist an der Unterseite des Rahmens 1 ein Anschlag 7 vorgesehen, gegen den die Längsstrebe 3 des Unterfahrschutzes mit einer Anschlagfläche 8 anliegt. In der in Figur 1 dargestellten Lage erstreckt sich die Längsstrebe 3 entgegen Pfeilrichtung F schräg nach hinten und unten, und zwar derart, daß der in Figur 1 nicht dargestellte Schutzbalken 4 eine Höhenlage einnimmt, die der für den Straßenverkehrsbetrieb gesetzlich vorgegebenen Höhenlage entspricht.

Zur Querachse 5 in Gegenrichtung gegenüber dem Anschlag 7 versetzt ist am Rahmen 1 eine Stütze 9 befestigt, über die in Verbindung mit einer Spannvorrichtung 10 die Längsstrebe 3 und damit der Unterfahrschutz 2 fixierbar ist. Die Spannvorrichtung 10 umfaßt einen an der Stütze 9 um die Achse 11 verschwenkbaren Verriegelungshebel 12, der mit einem der Längsstrebe 3 zugeordneten Verriegelungssegment 13 zusammenwirkt und der, wie Figur 1 zeigt, über ein Zwischenstück 14 mit einem Schwenkhebel 15 verbunden ist. Der Schwenkhebel ist im dargestellten Ausführungsbeispiel als Handhebel ausgebildet, kann aber auch über ein Stellelement oder dergleichen betätigbar sein, so daß eine Fernbetätigung möglich ist. Dies ist hier allerdings nicht gezeigt.

Das Verriegelungssegment 13 wirkt mit dem Verriegelungshebel 12 über einen dem Verriegelungshebel 12 zugeordneten Nocken 16 zusammen, der in der in Figur 1 dargestellten Position der Spannvorrichtung eine obere Anlaufkurve 17 des Verriegelungssegmentes übergreift und dadurch die Längsstrebe 3 bezogen auf die Querachse 5 im Uhrzeigersinn vorspannt und gegen den Anschlag 7 spielfrei verspannt. In dieser Spannlage nimmt der Schwenkhebel 15 die in Vollinien dargestellte Stellung ein, während strichpunktiert die Lage des Schwenkhebels 15 eingezeichnet ist, in der der Nocken 16 von der Anlaufkurve 17 des Verriegelungssegmentes 13 freiliegt.

In der in Vollinien gezeigten Spannlage liegt der dem Schwenkhebel 15 zugeordnete Anlenkpunkt 18 des Zwischenstückes 14 unterhalb der Verbindungslinie, die durch den Anlenkpunkt 19 des Zwischenstückes 14 am Verriegelungshebel 12 und die Schwenkachse 20 des Schwenkhebels 15 bestimmt ist. In der Öffnungslage des Schwenkhebels 15, die durch die strichpunktierte Stellung des Schwenkhebels symbolisiert ist, liegt der Anlenkpunkt 18 dagegen, was hier nicht dargestellt ist, oberhalb dieser Verbindungsline. Dementsprechend durchläuft der Anlenkpunkt 18 eine Totpunktstellung und es ist deshalb der Verriegelungshebel 12 in der Verriegelungsstellung gesichert. Das Zwischenstück 14 ist, wie die schematische Darstellung andeutet, in Streckrichtung federnd vorgespannt. Zusätzlich ist das Zwischenstück in Bezug auf seine Gesamtlänge, aus der es bis zu einem gewissen Grade federnd zusammengedrückt werden kann, einstellbar.

In Bezug auf den Geländeeinsatz kann die in Figur 1 eingestellte, der Straßenverkehrslage entsprechende Höhenlage des Unterfahrschutzes eine Beschränkung der Bodenfreiheit und des Böschungswinkels bedeuten.

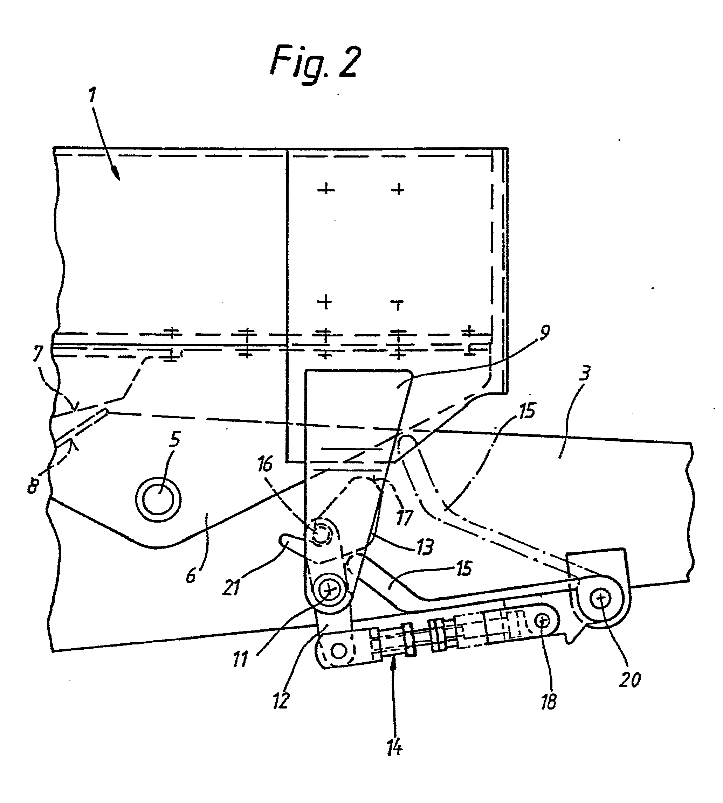

Um solche Beschränkungen für den Geländeeinsatz zu vermeiden, kann der Unterfahrschutz, wie in Figur 2 dargestellt, in eine Geländeverkehrslage nach oben um die Querachse 5 ver schwenkt werden. Ausgehend von der Lage gemäß Figur 1 ist dies dadurch möglich, daß zunächst durch Verstellen des Schwenkhebels 15 in seine strichpunktierte Lage die Verspannung gelöst wird und daß anschließend der Unterfahrschutz in die in Figur 2 dargestellte Lage angehoben wird. Beim Anhebel kommt der Nocken 16 des Verriegelungshebels 12 zunächst gegen die Nase 21 des Verriegelungssegmentes 13 zur Anlage. In dieser Stellung kann dann der Schwenkhebel 15 nach unten gedrückt werden, wodurch der Verriegelungshebel 12 im Uhrzeigersinn verschwenkt wird und der Nocken 16 in eine maulartige Öffnung 22 des Verriegelungssegmentes eingreift. In dieser Lage ist, da die maulartige Öffnung 22 den Nocken 16 nach oben und unten übergreift, die Höhenlage der Längsstrebe 3 gegenüber der Stütze 9 fixiert. Auch bei der Verspannung in der angehobenen Geländeverkehrslage befindet sich der Anlenkpunkt 18 in einer Übertotpunktlage, so daß durch die federnde Vorspannung des Zwischenstückes 14 eine selbsttätige Sicherung erreicht ist.

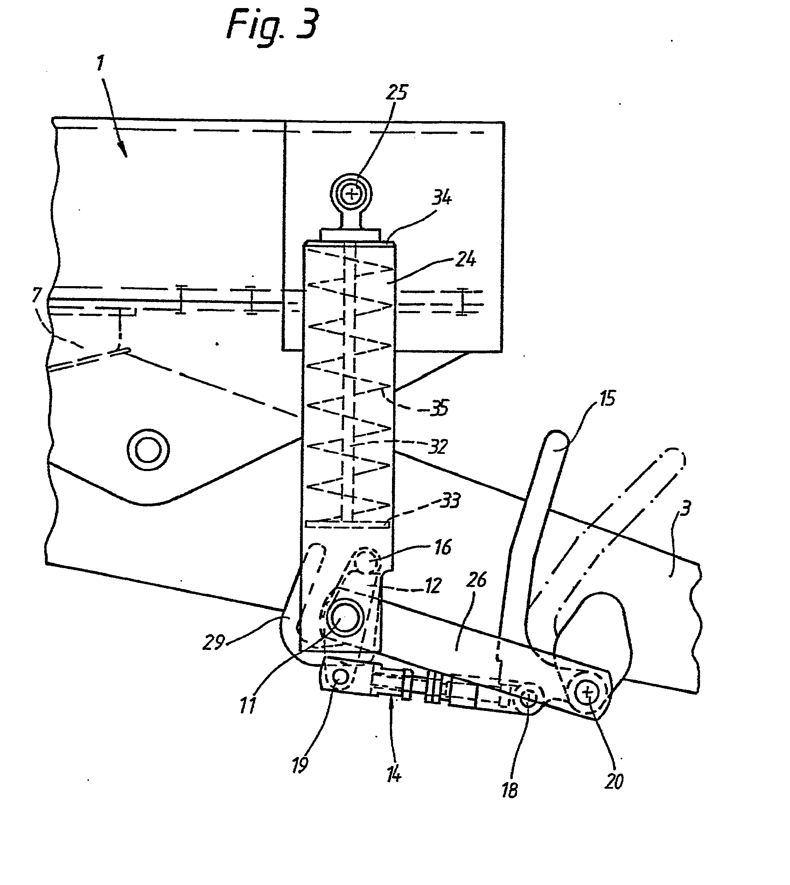

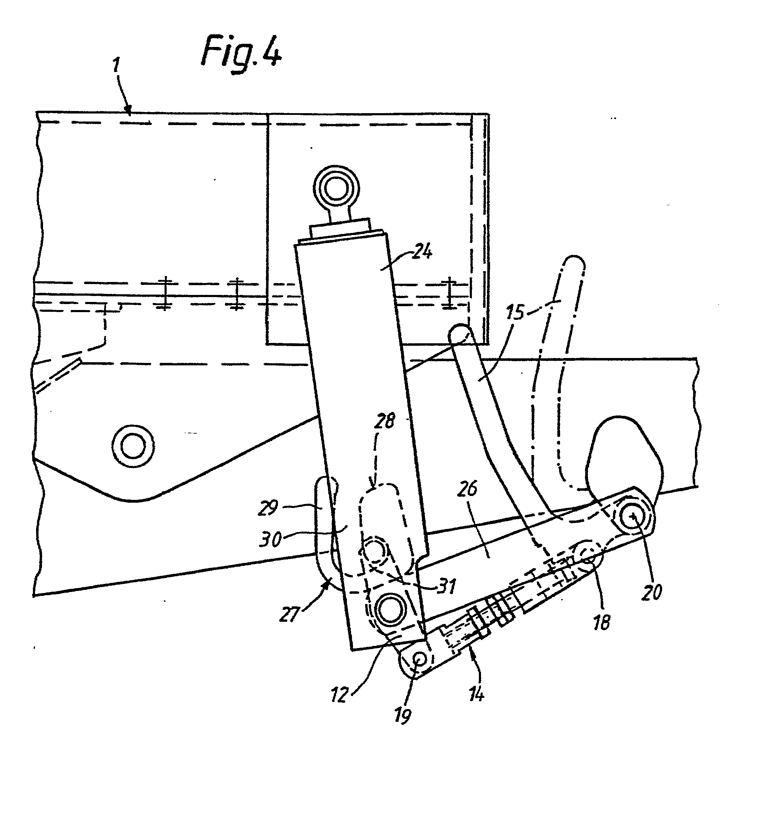

Eine im grundsätzlichen Aufbau entsprechende Gestaltung der Spannvorrichtung ist in den Figuren 3 und 4 veranschaulicht. Für gleiche Teile finden deshalb gleiche Bezugszeichen Verwendung und es kann auf die Schilderung der übereinstimmenden Details weitgehend verzichtet werden. Insoweit wird auf die bisherigen Ausführungen verwiesen.

Der Lösung gemäß Figuren 3 und 4 liegt der Gedanke zugrunde, daß der Unterfahrschutz in seiner Geländeverkehrslage dann für den Betrieb des Fahrzeuges nachteilig ist, wenn dieses beispielsweise als Kipperfahrzeug ausgebildet ist und die Kippermulde zum Abkippen nach hinten hochgeschwenkt wird.

Diese Situation ist in Figur 5 veranschaulicht, wo die Kippermulde mit 23 bezeichnet ist. Auf die Darstellung gemäß Figur 5 wird im weiteren noch eingegangen.

Abweichend von dem in Figuren 1 und 2 Gezeigten ist in den Figuren 3 und 4 als Stütze ein Federzylinder 24 vorgesehen. Dieser Federzylinder 24 ist einerseits am Rahmen 1 im Anlenkpunkt 25 schwenkbar angelenkt. Er trägt an seinem der Anlenkung 25 gegenüberliegenden Ende die Achse 11, auf der der Verriegelungshebel 12 abgestützt ist. Der Verriegelungshebel seinerseits ist wiederum mit einem Nocken 16 versehen und dem Nocken 16 gegenüberliegend weist er die Anlenkung 19 auf, in der das Zwischenstück 14 angeschlossen ist, das seinerseits mit dem Schwenkhebel 15 im Anlenkpunkt 18 verbunden ist. Die Schwenkachse des Schwenkhebels 15 ist wiederum mit 20 bezeichnet. Der Abstand zwischen der Achse 11 des Verriegelungshebels 12, und damit zwischen dem Federzylinder 24 und der Schwenkachse 20 des Schwenkhebels 15 ist durch einen Lenker 26 festgelegt. Eine solche Festlegung ist nötig, um bei Verschwenkbarkeit des Federzylinders 24 um den Anlenkpunkt 25 mit der bereits gschilderten Spannvorrichtung 10 im wesentlichen ohne Änderungen arbeiten zu können.

Das Verriegelungssegment 27 ist bei der Ausgestaltung gemäß Figuren 3 und 4 im wesentlichen gleich ausgebildet. Es weist eine Anlaufkurve 28 auf, gegen die der Nocken 16 in der Verriegelungsstellung für die Straßenverkehrslage (Figur 3) verspannt ist. Über den Nocken 16 wird somit die Längsstrebe 3 im Uhrzeigersinn belastet und ist damit, wie anhand der Figuren 1 und 2 erläutert, gegen den Anschlag 7 verspannt.

Das Verriegelungssegment 27 ist desweiteren mit einer Führungsnase 29 versehen, die eine vordere Begrenzung für einen Führungskanal 30 bildet, in dem der Verriegelungsnocken 16 beim Anheben der Längsstrebe 3 in ihre der Geländeverkehrslage entsprechende Stellung nach unten gleitet. In der unteren Endstellung kann der Nocken 16 durch Verschwenkung des Schwenkhebels 15 aus der strichpunktierten Lage in die in Vollinien dargestellte Lage in eine maulartige Öffnung 31 eingreifen, so daß auch bei dieser Ausgestaltung eine Fixierung des Längsstrebe in der der Geländeverkehrslage entsprechenden Lage des Unterfahrschutzes möglich ist.

Figur 3 veranschaulicht den Aufbau des Federzylinders 24. In der rohrartigen Hülse desselben ist eine Kolbenstange 32 angeordnet, die mit dem oberen Anlenkpunkt 25 fest verbunden ist und die an ihrem unteren Ende eine Federauflage 33 aufweist. Zwischen der Federauflage 33 und der oberen Wand 34 des Zylinders ist eine Feder 35 eingespannt. Aufgrund dieser Ausgestaltung kann die Längsstrebe, und damit der Unterfahrschutz ausgehend von der Geländeverkehrslage gemäß Figur 4 bei entsprechender Belastung nach unten verschwenkt werden. Eine Verschwenkung über die der Staßenverkehrslage gemäß Figur 3 entsprechende Lage nach unten hinaus ist nicht möglich, da diese Lage über den Anschlag 7 begrenzt ist.

Ist der Unterfahrschutz, wie in Figur 4 gezeigt, in seiner der Geländeverkehrslage entsprechenden Lage verriegelt, und liegt der Unterfahrschutz in dieser Verriegelungslage im Schwenkweg der Kippermulde 23, wie in Figur 5 angedeutet, so kann die Kippermulde 23 beim Verschwenken nach hinten unten unmittelbar den Unterfahrschutz beaufschlagen und es kann dadurch der Unterfahrschutz nach unten weggedrückt werden, so daß ein ungestörtes Arbeiten mit der Kippermulde möglich ist. Figur 5 veranschaulicht dies schematisch, indem an der Kippermulde über Füße 36 Stützrollen 37 angebracht sind, die beim Verschwenken der Kippermulde nach unten auf den Längsstreben 3 zur Anlage kommen und dadurch die Schwenkbewegung des Unterfahrschutzes erzwingen. Figur 5 veranschaulicht, daß beim Abdrängen des Unterfahrschutzes 2 über die Kippermulde 23 durch Beaufschlagung der Längsstreben 3 mittels der Stützrollen 37 der Zylinder gegen die Kraft der Feder herausgezogen wird, so daß beim Rückstellen der Kippermulde der Unterfahrschutz selbsttätig in die Geländeverkehrslage als Ausgangslage zurückgestellt wird.

## Patentansprüche

1. Nutzfahrzeug, insbesondere Kipperfahrzeug mit im rückwärtigen Endbereich angeordnetem Unterfahrschutz (2), der aus seiner durch Verriegelung festgelegten Lage für den Straßenverkehrsbetrieb (Straßenverkehrslage) in eine angehobene Lage für den Geländeverkehrsbetrieb (Geländeverkehrslage) verschwenkbar und zusätzlich in dieser Lage arretierbar ist und der einen rückwärtigen, quer zur Fahrzeuglängsachse liegenden Schutzbalken (4) und, bezogen auf die Fahrzeuglängsrichtung, vor diesem liegende, diesen abstützende und um eine quer verlaufende Achse verschwenkbare Längsstreben (3) umfaßt, die über zumindest eine hinter der Schwenkachse liegende Stütze (24) gegen das Fahrzeug abgestützt sind, dadurch gekennzeichnet, daß die Längsstreben (3) nach vorne über die Schwenkachse (5) hinausragen und in der Straßenverkehrslage gegen einen vor der Schwenkachse (5) liegenden Anschlag (7) über eine Spannvorrichtung (10) verspannt sind, die, der mit dem Fahrzeugrahmen verbundenen Stütze (9, 24) zugeordnet, eine an dieser gelagerte Verriegelung (7, 12), und, der Längsstrebe (3) zugeordnet, ein mit einem Verriegelungshebel (12) zusammenwirkendes Verriegelungssegment (13) sowie einen Schwenkhebel (15) aufweist, der mit dem Verriegelungshebel (12) über ein Zwischenstück (14) verbunden ist.

2. Nutzfahrzeug nach Anspruch 1, dadurch gekennzeichnet, daß der Schwenkhebel (15) als Handhebel ausgebildet ist.

3. Nutzfahrzeug nach Anspruch 1 oder 2, d durch gekennzeichnet, daß das Zwischenstück (14) als Druckstück ausgebildet ist.

4. Nutzfahrzeug nach einem der Ansprüche 1 bis 3, dadurch gekennzeichnet, daß das als Druckstück ausgebildete Zwischenstück in seiner Länge einstellbar und gegen Federkraft zusammendrückbar ist.

5. Nutzfahrzeug nach einem der Ansprüche 1 bis 4, dadurch gekennzeichnet, daß das Verriegelungssegment (13) eine durch einen Verriegelungsnocken (16) beaufschlagbare Anlaufkurve (17) aufweist.

6. Nutzfahrzeug nach Anspruch 5, dadurch gekennzeichnet, daß zur Arretierung des Unterfahrschutzes (2) in der Geländeverkehrslage das Verriegelungselement (13) mit einer zusätzlichen Aufnahme (maulartige Öffnung 22) für den Verriegelungsnocken (16) versehen ist.

7. Nutzfahrzeug nach Anspruch 5 oder 6, dadurch gekennzeichnet, daß die Aufnahme als den Führungsnocken (16) aufnehmende Ausnehmung (maulartige Öffnung 22) ausgebildet ist.

8. Nutzfahrzeug nach einem der vorhergehenden Ansprüche, dadurch gekennzeichnet, daß die der Stütze (9) zugeordnete Lagerung des Verriegelungshebels (12) gegenüber dem Fahrzeugrahmen federnd nachgiebig im Sinne einer Verlängerung der Stütze gehalten ist.

9. Nutzfahrzeug nach Anspruch 8, dadurch gekennzeichnet, daß die Stütze als ausziehbarer Federzylinder (24) ausgebildet ist.

10. Nutzfahrzeug nach Anspruch 8 oder 9, dadurch gekennzeichnet, daß bei schwenkbarer Anlenkung des Federzylinders (24) am Fahrzeugrahmen die Spannvorrichtung (10) zusätzlich einen den Abstand zwischen der Schwenkachse (20) des Schwenkhebels (15) und der Anlenkung (19) des Zwischenstückes (14) am Verriegelungshebel (12) festlegenden Lenker (26) aufweist.

## Claims

1. An utility vehicle, particularly a tripper, with a bottom travel protector (2) mounted at the rear area which can be pivoted from its bolted stationary position for road travel operation (road travel position) into a raised position for land travel operation (land travel position) and can additionally be immobilized in this position, said utility vehicle having a rearward protection beam (4) situated transversally to the longitudinal axis of the vehicle, and longitudinal members (3) situated in front of the protection beam in the longitudinal direction of the vehicle and supporting it, and pivotable around a transversally-extending axis, said longitudinal members (3) being supported against the vehicle by means of at least one support (24) situated behind the pivoting axis, characterised in that the longitudinal members (3) protrude forward over the pivoting axis (5) and, in the road travel position, are braced against a stop (7) situated in front of the pivoting axis (5) by means of a clamping device (10) which is associated with the support (9, 24) connected with the vehicle chassis, has a bolting arrangement (7, 12) mounted on said support (9, 24), and, associated with the longitudinal member (3), a bolting segment (13) cooperating with a bolting lever (12) as well as a swivelling lever (15) which is connected with the bolting lever (12) by means of an intermediate member (14).

2. An utility vehicle according to Claim 1, characterized in that the swivelling lever (15) is constructed as a hand lever.

3. An utility vehicle according to claim 1 or 2, characterized in that the intermediate member (14) is constructed as a pressure member.

4. An utility vehicle according to one of claims 1 to 3, characterized in that the intermediate member constructed as a pressure member is adjustable in length and compressible against sring resistance.

5. An utility vehicle according to one of claims 1 to 4, characterized in that the bolting segment (13) has a rise curve (17) which can be impinged upon by a bolting cam (16).

6. An utility vehicle according to claim 5, characterized in that, for the immobilization of the bottom travel protector (2) in the land travel position, the bolting segment (13) is provided with an additional receiver (jaw-like opening 22) for the bolting cam (16).

7. An utility vehicle according to claim 5 or 6, characterized in that the receiver is designed as the recess (jaw-like opening 22) receiving the bolting cam (16).

8. An utility vehicle according to one of the foregoing claims, characterized in that the bearing of the bolting lever (12) associated with the support (9) is held elastically resiliently against the vehicle chassis in the sense of an extension of the support.

9. An utility vehicle according to claim 8, characterized in that the support is constructed as a telescopic spring cylinder (24).

10. An utility vehicle according to claim 8 or 9, characterized in that when the spring cylinder (24) is pivotally coupled on the vehicle chassis the clamping device (10) has additionally a guide rod (26) determining the distance between the pivoting axis (20) of the swivelling lever (15) and the coupling (19) of the intermediate member (14) on the bolting lever (12).

## Revendications

1. Véhicule utilitaire, notamment véhicule à benne basculante comprenant une protection anti-encastrement (2) agencée dans la région d'extrémité arrière et qu'on peut faire basculer de sa position de circulation sur route (position route), fixée par verrouillage, à une position relevée pour la circulation en tout terrain (position tout terrain), et qui peut en supplément être arrêtée dans cette position et qui comprend une barre de protection arrière (4) disposée transversalement à l'axe longitudinal du véhicule et des jambes de force longitudinales (3) situées en avant de cette barre, considéré dans la direction longitudinale du véhicule, qui donnent appui à cette barre et qui peuvent pivoter autour d'un axe d'articulation transversal, ces jambes de force prenant appui par rapport au véhicule par l'intermédiaire d'au moins un support (24) situé en arrière de l'axe d'articulation, caractérisé en ce que les jambes de force longitudinales (3) se prolongent vers l'avant au-delà de l'axe d'articulation et, dans la position de circulation sur route, sont appuyées avec précontrainte contre une butée (7) située en avant de l'axe d'articulation (5), sous l'action d'un dispositif de serrage (10) qui présente, associé au support (9, 24) qui est solidaire du châssis du véhicule, un verrouillage (7, 12) articulé sur ce support et, associé à la jambe de force longitudinale (3), un secteur de verrouillage (13) qui coopère avec un levier de verrouillage (12), ainsi qu'un levier oscillant qui est relié au levier de verrouillage (12) par un élément intermédiaire (14).

2. Véhicule utilitaire selon la revendication 1, caractérisé en ce que le levier oscillant (15) est constitué par un levier à main.

3. Véhicule utilitaire selon la revendication 1 ou 2, caractérisé en ce que l'élément intermédiaire (14) est un élément travaillant à la compression.

4. Véhicule utilitaire selon une des revendications 1 à 3, caractérisé en ce que l'élément intermédiaire constitué par un élément travaillant à la compression est réglable en longueur et peut se comprimer à l'encontre d'une force élastique.

5. Véhicule utilitaire selon l'une des revendications 1 à 4, caractérisé en ce que le secteur de verrouillage (13) présente une came d'entrée (17) qui peut être attaquée par une came de verrouillage (16).

6. Véhicule utilitaire selon la revendication 5, caractérisé en ce que, pour arrêter la protection anti-encastrement (2) dans la position de circulation sur tout terrain, l'élément de verrouillage (2) est muni d'un logement additionnel (ouverture 22 en forme de bouche) pour recevoir la came de verrouillage (16).

7. Véhicule utilitaire selon la revendication 5 ou 6, caractérisé en ce que le logement est constitué par un évidement (ouverture 22 en forme de bouche) qui reçoit la came de guidage (16).

8. Véhicule utilitaire selon l'une des revendications précédentes, caractérisé en ce que le palier du levier de verrouillage (12) qui est associé au support (9) est tenu par rapport au châssis du véhicule, de façon à pouvoir céder élastiquement dans le sens d'un allongement du support.

9. Véhicule utilitaire selon la revendication 8, caractérisé en ce que le support est constitué par un cylindre à ressort extensible (24).

10. Véhicule utilitaire selon la revendication 8 ou 9, caractérisé en ce que, si le cylindre à ressort (24) est articulé sur le châssis du véhicule de façon à pouvoir pivoter, le dispositif de serrage (10) présente en supplément une biellette (26) qui fixe la distance entre l'axe d'articulation (20) du levier oscillant (15) et l'articulation (19) de l'élément intermédiaire (14) sur le levier de verrouillage (12).

# Fig.1

# Fig. 2

# Fig. 3

EP 0 299 357 B1

*Fig.4*

# Fig. 5